# EUROPÄISCHE PATENTSCHRIFT

(11) **EP 2 976 263 B1**
(45) Veröffentlichungstag und Bekanntmachung des Hinweises auf die Patenterteilung: **28.11.2018**
(21) Anmeldenummer: 14713046.2
(22) Anmeldetag: 12.03.2014
(51) Int. Cl.: B64F 1/36

(54) **VORRICHTUNG ZUR BEHANDLUNG VON SORTIERGÜTERN**
APPARATUS FOR HANDLING GOODS TO BE SORTED
DISPOSITIF POUR LE TRAITEMENT DE PRODUITS À TRIER

(30) Priorität: 19.03.2013 DE 102013204810
(43) Veröffentlichungstag der Anmeldung: 27.01.2016
(73) Patentinhaber: Siemens Aktiengesellschaft, 80333 München (DE)
(72) Erfinder: ZIMMERMANN, Armin, 78465 Konstanz (DE); FELDER, Arndt, 59269 Beckum (DE); ZISCH, Rainer, 78337 Öhningen (DE); ENENKEL, Peter, 78462 Konstanz (DE)
(74) Vertreter: Maier, Daniel Oliver
(86) Internationale Anmeldenummer: PCT/EP2014/054813
(87) Internationale Veröffentlichungsnummer: WO 2014/146943

(56) Entgegenhaltungen:
- WO-A1-2008/094033
- DE-A1- 1 927 434
- GB-A- 1 384 593
- US-A- 3 260 349

## Beschreibung

Die Erfindung betrifft eine Vorrichtung zur Behandlung von Sortiergütern gemäß dem Oberbegriff des Patentanspruches 1.

US 3 260 349 A1 offenbart eine Gepäckförderanlage für automatische Gepäckabfertigung. GB 1 384 593 A beschreibt eine Gepäckförderanlage und in dieser verwendete Transportbehälter. DE 1 927 434 A1 betrifft ein System zur Handhabung von Material, bei dem Transporteinrichtungen mit Führungsspeichereinrichtungen zur Anwendung gelangen, wie dies insbesondere bei der Handhabung von Gepäck an Passagierendstationen verwendet werden kann. WO 2008/094033 A1 offenbart eine Sortiervorrichtung für Sortiergüter, insbesondere Gepäckstücke.

Der Transport von Sortiergütern innerhalb einer Sortiergutbehandlungsanlage erfolgt insbesondere in bekannten Paketsortieranlagen oder auch in Flughafenanlagen mit Hilfe eines Transportschalensystems. Bei letzterem werden die Gepäckstücke nach ihrer Aufnahme in die Behandlungsanlage auf Transportschalen übergeben. Die Fördertechnik ist demnach zur Förderung eines einheitlichen beziehungsweise uniformen Förderguts ausgelegt, was zur Vermeidung von Störungen von großem Vorteil ist. Die Transportschalen werden von einer stationären beziehungsweise bodenfesten Fördertechnik transportiert, die Schienen, Weichen, Merges, Steigstrecken, Hochgeschwindigkeitsstrecken, und dergleichen aufweist, in die feste Antriebselemente integriert sind. Als Antriebselemente werden angetriebene Rollen, Riemen, Linearmotoren und so weiter eingesetzt. An einem Sortierziel kann die Transportschale durch eine spezielle Aktorik gekippt werden, um das transportierte Gepäcksortiergut an eine abführende Fördereinheit abzugeben.

Außerdem ist eine Lösung mit umlaufenden Aufnahmezellen bekannt, die als sogenannter "Cross-Belt-Wagen" ausgebildet sind. Diese Wagen sind mit einem antreibbaren Band ausgestattet, welches an einem Sortierziel zur Abförderung des Gepäcksortierguts quer zur Transportrichtung angetrieben wird.

Eine weitere bekannte Lösung besteht in der Anordnung von Gurtbandelementen, vorzugsweise U-Kanälen, die schwenkbar ausgebildet sind. Ein Gepäcksortiergut wird von einem Gurtbandelement zum nächsten weitertransportiert. An einem Sortierziel wird das entsprechende Gurtbandelement ausgeschwenkt, wodurch das Gepäcksortiergut auf eine abführende Sortierendstelle, zum Beispiel eine Rutsche abgegeben wird.

Eine Abgabe des Stückguts erfolgt mit Sorternenngeschwindigkeit ausschließlich längs in Transportrichtung.

Der Erfindung liegt die Aufgabe zugrunde, eine Vorrichtung zur Behandlung von Sortiergut der eingangs genannte Art bereitzustellen, bei welcher der Herstell-, Betriebs- und Wartungsaufwand reduziert werden kann.

Die Aufgabe wird erfindungsgemäß gelöst durch eine gattungsgemäße Vorrichtung mit den im kennzeichnenden Teil des Patentanspruches 1 angegebenen Merkmalen. Demnach weist die Sortieranlage zumindest eine Hauptförderstrecke für Transportmittel des Satzes von Transportmitteln, zumindest eine wenigstens einem Sortierziel zugeordnete Entladestelle zum Entladen der Transportmittel, und eine der Entladestelle zugeordnete, von der Hauptförderstrecke abgezweigte Entladestrecke auf, die derart ausgebildet ist, dass das Befahren der Entladestrecke durch ein beladenes Transportmittel ein Entladen des zugeordneten Sortierguts an der Entladestelle bewirkt. Hierdurch kann - im Gegensatz zu üblichen, mit Kippantrieb ausgestatteten Kippschalen, Cross-Belt-Wagen und Gurtbandelementen - auf eine für das Entladen eines aufgenommenen Sortierguts speziell ausgelegte Aktorik des Transportmittels verzichtet werden. Im Vergleich zu den genannten Lösungen - in welchen ein Entladen des Sortierguts ausschließlich senkrecht zur Transportrichtung erfolgt - kann eine erhöhte Flexibilität im Hinblick auf die Entladerichtung erreicht werden. Das Befahren der Entladestrecke durch ein beladenes Transportmittel bewirkt vorteilhafterweise eine Zwangsentladung eines Sortiergutaufnahmemittels des Transportmittels, ohne dass eine Bewegung dieses Sortiergutaufnahmemittels relativ zu übrigen Teilen des Transportmittels angetrieben werden muss. Es kann insbesondere beim Befahren der Entladestrecke vorteilhaft eine Bewegung des Sortiergutaufnahmemittels relativ zum Boden, insbesondere ein Kippen, mittels einer konstruktiven Ausführung einer Führungstechnik der Entladestrecke erreicht werden. Die Entlademöglichkeit der Transportmittel kann konstruktiv einfach mit Hilfe einer geringen Anzahl an verschieden ausgelegten Baumodulen bereitgestellt werden. So können zur Bildung einer Entladestelle eine Weiche an einer Abzweigstelle der Hauptförderstrecke und für einen Kippvorgang des Transportmittels speziell ausgelegte Streckensegmente für die Entladestrecke ausreichen. Hiermit kann eine hohe Anzahl an Entladestellen kostengünstig erreicht werden.

Unter einem "Sortiergut" soll insbesondere ein Gepäckstück oder ein Paket mit einem bestimmten Sortierziel oder ein Bündel von Gepäckstücken oder Paketen verstanden werden, welchen ein gleiches Sortierziel zugeordnet ist.

Der Begriff "Sortierziel" bezieht sich vorzugsweise auf eine Stelle einer Flughafenanlage, Bahnhofanlage, Hafenanlage oder einer ähnlichen Einrichtung zum Empfang von Passagieren, die mit einer Gepäckbehandlungsvorrichtung ausgestattet ist, an welcher ein Gepäckstück nach dessen Transport zumindest durch die Sortieranlage für den Empfang durch einen Empfänger behandelt wird. Ein Empfänger in diesem Sinne kann ein Passagiertransportmittel, etwa ein Fahrzeug, ein Flugzeug oder ein Passagierschiff sein, in welches das sortierte Gepäckstück zu verladen ist. Der Empfänger kann auch ein Gepäckausgabemittel sein, das zur Ausgabe von Gepäckstücken an Passagieren dient. Ein Sortierziel kann demnach im ersten genannten Fall insbesondere eine Umladestelle sein, auch "Make-Up-Bereich" genannt, an welcher das sortierte Gepäckstück in ein Transportmittel manuell und/oder zumindest teilautomatisch geladen wird, durch welches es zum Passagiertransportmittel gefördert oder direkt in das Passagiertransportmittel geladen wird. Diese genannten Umladestellen sowie die entsprechenden Sortierziele sind demnach vorzugsweise einem zu ladenden Passagiertransportmittel zugeordnet. Ein Sortierziel kann im zweiten genannten Fall eine Stelle sein, an welcher das Gepäckstück in eine Anlage zur Gepäckausgabe gelangt, auch "Baggage Reclaim" genannt. Beispielweise kann das Gepäckstück an dieser Stelle auf ein Karussell umgeladen werden, das das Gepäcksortiergut in einen für die Passagiere zugänglichen Bereich fördert.

Falls ein Gepäckstück vor einer Abgabe an einem der oben genannten Sortierziele zu speichern ist, kann eine Speicherzelle einer Speicheranlage als vorläufiger Empfänger im obigen Sinne betrachtet werden. Die Speicherzelle kann hierbei als vorläufiges Sortierziel betrachtet werden, welches einem zu speichernden Gepäckstück zugeordnet wird, falls die Zuordnung eines endgültigen Sortierziels der weiter oben genannten Arten nicht erfolgt bzw. nicht möglich ist.

Der Begriff "Eingabestelle" bezieht sich vorzugsweise auf eine Stelle einer der oben genannten Einrichtungen zum Empfang von Passagieren, an welcher ein zu sortierendes Gepäckstück in eine Gepäckbehandlungsanlage gelangt. Beispielsweise kann eine Eingabestelle einem Gepäckaufgabeschalter entsprechen, an welchem ein Passagier ein Gepäcksortiergut abgibt. In einer anderen Ausführung kann eine Eingabestelle eine Stelle sein, an welcher ein Gepäckstück eines angekommenen Passagiertransportmittels nach dessen Entladen vom Passagiertransportmittel auf eine Fördertechnik einer Gepäckbehandlungsanlage geladen wird.

Unter einer Behandlung, welche "zwischen" einer Eingabestelle und Sortierzielen erfolgt, soll insbesondere eine Behandlung verstanden werden, die entlang zumindest eines Transportweges erfolgt, welcher die Eingabestelle mit zumindest einem Sortierziel verbindet, wobei der Verlauf des Transportweges für ein Sortiergut vom Sortierziel abhängt, welches dem Sortiergut zugeordnet ist. Das Sortierziel entspricht hierbei dem Ende des Transportweges. Die Anordnung der Sortieranlage "zwischen" der Eingabestelle und den Sortierzielen bezieht auf den Fluss von Sortiergütern entlang dieser Transportwege.

Insbesondere ist die Sortieranlage zur Bereitstellung eines bestimmten Transportweges vorgesehen, welcher zu einem zugeordneten Sortierziel führt. Der Transportweg kann die Eingabestelle mit dem Sortierziel direkt verbinden oder er kann von zumindest zwei Abschnitten gebildet sein, die die Eingabestelle mit einer Speicheranlage einerseits und diese mit einem zugeordneten Sortierziel andererseits verbinden.

In einer bevorzugten Ausführung der Erfindung weist die Sortieranlage einen Satz von Entladestellen auf, die in Förderrichtung der Hauptförderstrecke hintereinander angeordnet sind, wobei diesem Satz von Entladestellen ein Satz von Entladestrecken zugeordnet ist, die an hintereinander angeordneten Abzweigstellen von der Hauptförderstrecke abgezweigt sind. Dadurch kann in einer kompakten Ausgestaltung eine hohe Anzahl an Sortierzielen durch die Hauptförderstrecke bedient werden.

Insbesondere sind die Entladestrecken parallel zueinander ausgerichtet und in eine gemeinsame Leerfahrtstrecke für entladene Transportmittel zusammengeführt, wodurch ein effizientes Abführen entladener Transportmittel und eine platzsparende Anordnung der Entladestrecken erreicht werden können.

Es kann in diesem Zusammenhang eine platzsparende Kombination der Entlade-strecken mit die entladenen Sortiergüter zu den Sortierzielen abführenden Förderelementen erreicht werden, wenn die Hauptförderstrecke geradlinig ausgebildet ist und die Entlade-strecken relativ zur Hauptförderstrecke schräg ausgerichtet sind. Unter einer "schrägen" Ausrichtung soll insbesondere eine Ausrichtung verstanden werden, bei welcher zwischen der Hauptförderstrecke und den Entladestrecken jeweils ein spitzer Winkel gebildet ist.

Gemäß einer alternativen Ausführungsvariante schließen sich die Entladestrecken an die Hauptförderstrecke wieder an, wodurch eine Bauraumbeanspruchung lateral zur Hauptförderstrecke gering gehalten werden kann, da auf eine Leerfahrtstrecke parallel zur Hauptförderstrecke eingespart werden kann. Die Entladestrecken schließen sich zweckmäßigerweise an Zusammenführungsstellen an die Hauptförderstrecke an, wobei sich die Abzweigstellen und die Zusammenführungsstellen der Entlade-strecken vorzugsweise abwechseln.

Außerdem wird vorgeschlagen, dass den Entladestrecken jeweils ein Förderelement zugeordnet ist, welches zum Abführen eines entlang der Entladestrecke entladenen Sortierguts zum zugeordneten Sortierziel dient und sich unterhalb der Entladestrecke erstreckt, wodurch eine weitere Platzeinsparung erreicht werden kann.

Gemäß einer weiteren vorteilhaften Ausführung der Erfindung weist die Hauptförderstrecke einen geschlossenen, ringförmigen Abschnitt auf.

Des Weiteren wird vorgeschlagen, dass die Transportmittel jeweils ein Sortiergutaufnahmemittel und ein Antriebsmittel aufweisen, das zur Kopplung mit einer bodenfesten Antriebstechnik zur Fortbewegung des Transportmittels gekoppelt ist, wodurch gängige, weit verbreitete Sortiergutaufnahmemittel, wie insbesondere Transportschalen, und eine dafür vorgesehene Fördertechnik eingesetzt werden können.

Es kann jedoch vorteilhaft auf Antriebselemente einer stationären Fördertechnik zumindest in einem Teilbereich der Sortieranlage verzichtet werden, wenn die Transportmittel als Transportfahrzeuge umfassend jeweils eine Antriebseinheit ausgebildet sind, die zur autonomen Fortbewegung des Transportfahrzeugs wenigstens innerhalb eines Teilbereichs der Sortieranlage vorgesehen ist. Ferner kann eine erhöhte Flexibilität in der Lade-, Transport- und Abladerichtung sowie in der Transportgeschwindigkeit in verschiedenen Bereichen erreicht werden. Durch diese erhöhte Flexibilität kann ferner der Gesamtdurchsatz vorteilhaft optimiert werden. Insbesondere kann die Geschwindigkeit eines Transportfahrzeugs auf einer Entladestrecke von einer Nenngeschwindigkeit der Hauptförderstrecke unterschiedlich sein.

Insbesondere ist der Satz von Transportfahrzeugen zu einer autonomen Fortbewegung zumindest in einem Teilbereich der Sortieranlage vorgesehen, der an die Sortierziele angrenzt. Anders ausgedrückt, können sich die Transportfahrzeuge auf einem Transportwegabschnitt autonom bewegen, welcher bis zum Sortierziel führt. In einer besonders vorteilhaften Ausführung können sich die Transportfahrzeuge entlang eines ganzen Transportwegs autonom bewegen, welcher die Eingabestelle oder eine Ladestation zum Beladen der Transportfahrzeuge mit einem Sortierziel verbindet, wodurch der Einsatz fester Antriebselemente in der gesamten Sortieranlage weitestgehend vermieden werden kann. Ist der Transportweg über eine Speicheranlage geführt, kann der Transport entlang der oben genannten Abschnitte mittels verschiedener Transportfahrzeuge erfolgen.

In einer bevorzugten Ausführung der Erfindung weist die Vorrichtung zur Behandlung von Sortiergut einen Satz von Sortiergutaufnahmemitteln auf, die jeweils eine Aufnahmefläche für ein Sortiergut bilden und zur trennbaren Kopplung mit einem Transportfahrzeug des Satzes von Transportfahrzeugen vorgesehen sind. Dadurch kann der Transport eines Sortierguts bis zum zugeordneten Sortierziel mittels eines einzigen Sortiergutaufnahmemittels erfolgen. Anders ausgedrückt kann ein Sortiergut während dessen Behandlung bis zur Entladung an einem Sortierziel auf dem gleichen Sortiergutaufnahmemittel verbleiben. Dieses kann insbesondere mit einer Codiervorrichtung vorgesehen sein, die mit Daten des aufgenommenen beziehungsweise aufzunehmenden Sortierguts codiert wird. Diese Daten können vorteilhaft von Lesevorrichtungen der Sortieranlage zur Bereitstellung eines Transportweges beziehungsweise zur Verfolgung des Sortierguts ausgelesen und ausgewertet werden. In einer einfachen Ausführung sind die Sortiergutaufnahmemittel als Transportschalen ausgebildet. Die Sortiergutaufnahmemittel sind vorzugsweise mit einer Kopplungsschnittstelle versehen, durch welche eine trennbare Kopplung mit einem Kopplungsbereich der Transportfahrzeuge hergestellt werden kann.

Außerdem wird vorgeschlagen, dass die Sortiergutbehandlungsvorrichtung eine bodenfeste Führungsvorrichtung aufweist, die zur Führung der Transportfahrzeuge vorgesehen ist. Hierdurch kann die Ausrüstung der Transportfahrzeuge mit einer aufwendigen, aktiven Lenkvorrichtung, die für jegliche Bewegungsart ausgelegt ist, vermieden werden, wobei die Führungsvorrichtung dennoch weitestgehend, insbesondere vollkommen frei von Antriebselementen ist. Es kann hierbei eine energiesparende Antriebseinheit für die Ausrüstung der Transportfahrzeuge eingesetzt werden. Sind - in einer besonderen Ausführung - die Transportfahrzeuge autark bezüglich ihrer Energieversorgung, können durch den geringen Energieverbrauch klein dimensionierte Energiespeicher verwendet werden. In dieser Ausführung kann außerdem auf eine permanente Energiezufuhr, die zum Beispiel über die statische Führungsvorrichtung erfolgt, verzichtet werden.

Die Führungsvorrichtung kann insbesondere von modularen, rein passiven Fahrbahnelementen gebildet sein, die aus einer geringen Anzahl an Modulen ausgewählt werden. Diese können als Geradesegment, horizontales Bogensegment, vertikales Bogensegment, Weichensegment, das auch als Zusammenführungssegment genutzt werden kann, und so weiter ausgebildet sein. Die Topologie der Führungsvorrichtung kann besonders flexibel ausgelegt werden. So kann beispielsweise auf der Basis einer geringen Anzahl an Fahrbahnmodulen die Topologie eines Linearsorters, der gerade, U-förmig, mäanderförmig, einseitig, doppelseitig, und so weiter, ausgeführt werden kann, und/oder eines Ringsorters bereitgestellt werden. Eine Anordnung von Sorterabschnitten in mehreren Ebenen übereinander kann durch die Verbindung von Geradesegmenten und/oder vertikalen Bogensegmenten realisiert werden.

Vorteilhafterweise weist die Führungsvorrichtung die oben beschriebenen Abzweigstellen auf, an welchen Entladestrecken von der Hauptförderstrecke abgezweigt sind und die jeweils eine Weiterfahrt in eine erste oder in zumindest eine zweite Förderrichtung ermöglichen, wobei die Transportfahrzeuge jeweils eine aktive Lenkvorrichtung aufweisen, die eine Weiterfahrt in der ersten beziehungsweise zweiten Förderrichtung bewirkt, wodurch passive statische Führungselemente, insbesondere passive Weichen, an diesen Abzweigstellen eingesetzt werden können. Unter einer "aktiven" Lenkvorrichtung soll eine Lenkvorrichtung verstanden werden, die mit einem Antrieb des Transportfahrzeugs betreibbar ist.

Um eine große Menge von Transportfahrzeugen zu steuern, wird vorgeschlagen, dass die Transportfahrzeuge jeweils eine Steuereinheit zum Steuern der Fortbewegung aufweisen und ein bodenfestes Verkehrsleitsystem vorgesehen ist, mit welchem die Steuereinheit datentechnisch verbunden ist. Die Kommunikation zwischen der Steuereinheit und dem Verkehrsleitsystem kann über eine Sende- und Empfangseinheit des Transportfahrzeugs erfolgen, welche zur Herstellung einer vorzugsweise drahtlosen Datenverbindung mit dem Verkehrsleitsystem vorgesehen ist.

Alternativ oder zusätzlich kann ein Teil der Steueraufgaben dezentral erfolgen, indem die Transportfahrzeuge jeweils eine Steuereinheit zum Steuern der Fortbewegung aufweisen und die fahrzeugseitigen Steuereinheiten zu einer Datenkommunikation untereinander vorgesehen sind. Dies kann insbesondere durch Herstellung einer drahtlosen Datenkommunikation zwischen Sende- und Empfangseinheiten der Transportfahrzeuge erfolgen.

Ein Entladen eines aufgenommenen Sortierguts kann wie oben beschrieben mittels einer Bewegung des Transportmittels relativ zum Boden angetrieben werden, wobei diese Bewegung mittels einer gezielten Ausgestaltung von Führungselementen der Entladestrecke erreicht wird, indem beispielsweise die Entladestrecke ein verdrilltes Streckensegment oder ein gebogenes, zumindest teilweise vertikal ausgerichtetes Streckensegment aufweist. Alternativ ist der Entladestrecke ein bodenfestes Abweiselement zugeordnet, wodurch die horizontale Ausrichtung des Transportmittels während der Entladung aufrechterhalten werden kann.

Weitere Eigenschaften und Vorteile der Erfindung ergeben sich aus Ausführungsbeispielen, die nachfolgend anhand der Zeichnungen näher erläutert werden, in deren
- FIG 1: eine Gepäckbehandlungsvorrichtung mit einer Sortieranlage und einer Speicheranlage,
- FIG 2: ein Transportfahrzeug zum Transport eines Gepäcksortierguts,
- FIG 3: eine detaillierte Ansicht der Sortieranlage von oben im Bereich von Entladestellen,
- FIG 4: das Transportfahrzeug aus FIG 2 entlang eines verdrillten Streckensegments an einer Entladestelle,
- FIG 5: das Transportfahrzeug aus FIG 2 entlang eines gebogenen Streckensegments an einer Entladestelle,
- FIG 6: das Transportfahrzeug aus FIG 2 entlang eines mit einem Abweiser versehenen Streckensegments an einer Entladestelle,
- FIG 7: eine Ausführungsvariante der linearen Topologie aus FIG 3,
- FIG 8: die Anordnung von zwei Sätzen von Entladestellen, die durch eine gemeinsame Hauptförderstrecke bedient werden,
- FIG 9: eine alternative Ausführung der Anordnung aus FIG 8,
- FIG 10: die Anordnung von zwei Sätzen von Entladestellen, die durch eine gemeinsame, ringförmige Hauptförderstrecke bedient werden,
- FIG 11: eine alternative Ausführung der Anordnung aus FIG 10 mit Förderstrecken auf verschiedenen Ebenen,
- FIG 12: die Anordnung von zwei Sätzen von Entladestellen, wobei zwei entsprechende Entladestellen der Sätze einem gleichen Sortierziel zugeordnet sind,
- FIG 13: die Kombination zweier Anordnungen gemäß FIG 3, mit Übergangsstrecken zwischen den zugeordneten Hauptförderstrecken,
- FIG 14: die Kombination zweier Anordnungen gemäß FIG 8, mit Übergangsstrecken zwischen den zugeordneten Hauptförderstrecken,
- FIG 15: eine Ausführungsvariante der Anordnung gemäß FIG 10, mit Abkürzungsstrecken zwischen Teilen des Ringes,
- FIG 16: eine alternative Ausführung der Anordnung aus FIG 15 mit Förderstrecken auf verschiedenen Ebenen,
- FIG 17: die Speicheranlage aus FIG 1 in einer Ansicht von oben,
- FIG 18: die Speicheranlage aus FIG 1 in einer Seitenansicht,
- FIG 19: eine Ausführungsvariante der Speicheranlage aus FIG 18,
- FIG 20: die Speicheranlage aus FIG 19 in einer Frontansicht,
- FIG 21: eine Ausführungsvariante eines Transportmittels und
- FIG 22: eine Ausführungsvariante der Topologie aus FIG 3.

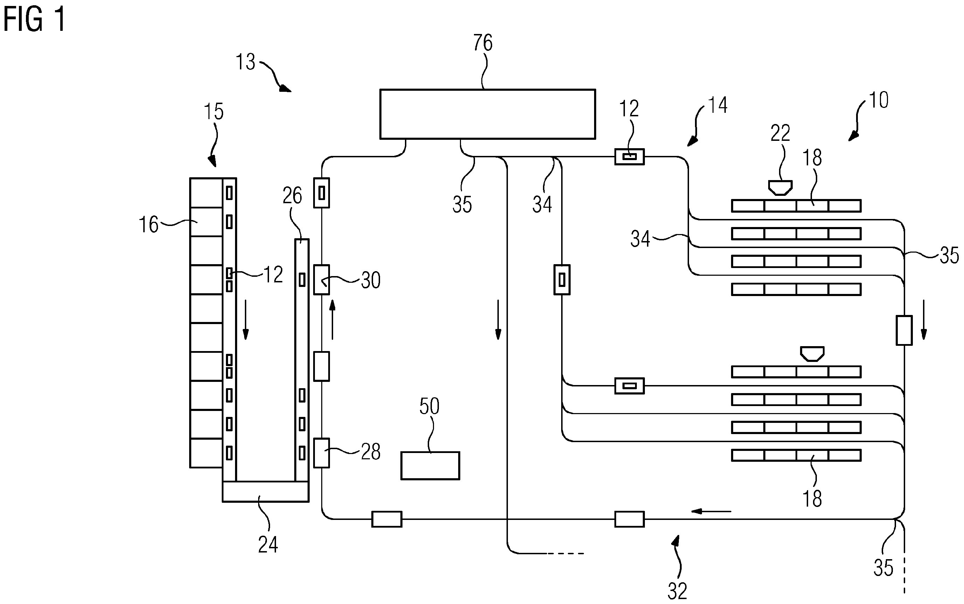

FIG 1 zeigt eine Behandlungsanlage 10 eines Flughafens in einer schematischen Ansicht von oben. Diese dient zur Behandlung, insbesondere zur Aufnahme und zum Transport von Gepäcksortiergütern 12 entlang Transportstrecken 14, wobei einem Transportweg gemäß einer Kombination von Transportstrecken 14 von einem Gepäcksortiergut 12 gefolgt wird und die Kombination gemäß Sortierkriterien gebildet wird, die dem Gepäcksortiergut 12 zugeordnet sind.

Die Behandlungsanlage 10 ist Bestandteil einer Gepäckbehandlungsvorrichtung 13 des Flughafens, die außerdem zumindest eine Eingabestelle 15 mit mehreren Eingabestationen 16 und mehrere Sortierziele 18 aufweist. Im betrachteten Ausführungsbeispiel wird davon ausgegangen, dass die Eingabestelle 15 einem Gepäckaufgabebereich oder "Check-In-Bereich" des Flughafens entspricht, wobei die Eingabestationen 16 von personalbedienten und/oder automatischen Schaltern gebildet sind. Die Gepäcksortiergüter 12 werden an der Eingabestelle 15 jeweils mit einem Identifikationsmittel versehen, mittels dessen Informationen zumindest über das Flugziel, den zugeordneten Flug und den Besitzer des Gepäcksortierguts 12 in optischer und/oder elektronischer Form gespeichert werden. Das Identifikationsmittel kann als Gepäckbanderole mit aufgedrucktem Barcode oder als elektronischer Speicher mit Empfangs- und Sendeeinheit, insbesondere als RFID-Tag, ausgebildet sein.

Die Sortierziele 18 entsprechen Umladestationen, an welchen ein von der Behandlungsanlage 10 behandeltes Gepäcksortiergut 12 manuell oder zumindest teilautomatisiert auf bzw. in ein Transportmittel 22 umgeladen wird, das zum Transportieren einer Sammlung von Gepäcksortiergütern 12 zu einem Flugzeug dient. Die Transportmittel 22 können als Transportwagen oder als Container (z.B. genormte Ladeeinheiten, wie so genannte ULDs) ausgebildet sein.

In einer weiteren, nicht gezeigten Ausführung kann die Eingabestelle 15 eine Umladestation sein, an welchen Gepäcksortiergüter 12 eines gelandeten Flugs von einem oben genannten Transportmittel 22 auf eine Fördertechnik der Behandlungsanlage 10 umgeladen werden. Die Sortierziele 18 können hierbei einem Gepäckausgabebereich oder "Baggage-Claim-Bereich" des Flughafens, insbesondere einem bestimmten Gepäckausgabeband, oder einer weiteren Umladestation entsprechen, falls das Gepäcksortiergut 12 ein Transfergepäck ist.

Im dargestellten Ausführungsbeispiel weist die Gepäckbehandlungsanlage eine Untersuchungsanlage 24 auf, in welcher die aufgegebenen Gepäckssortiergüter 12 untersucht, insbesondere mittels Röntgenstrahlungen gescannt werden.

Die Behandlungsanlage 10 weist eine Ladestation 26 auf, an welcher die von der Untersuchungsanlage 24 für eine Weiterbehandlung zugelassenen Gepäcksortiergüter 12 auf Transportmittel 28 geladen werden. Die Transportmittel 28 weisen jeweils eine Aufnahmefläche 30 auf, die zur Einzelaufnahme eines Gepäcksortierguts 12 vorgesehen ist. Die Beladung der Transportmittel 28 kann manuell oder zumindest teilautomatisiert, in unbewegtem Zustand der Transportmittel 28 vorzugsweise senkrecht zur Förderrichtung, oder in bewegtem Zustand der Transportmittel 28 vorzugsweise schräg zur Förderrichtung oder von oben, erfolgen.

In einer alternativen Ausführung können die Transportmittel 28 bereits im Bereich der Eingabestelle 15, insbesondere an jeder Eingabestation 16 beladen werden. Hierbei dienen die Transportmittel 28 zum Transport der Gepäcksortiergüter 12 durch die Untersuchungsanlage 24. In dieser Ausführung kann auf die Ladestation 26 verzichtet werden.

Die Behandlungsanlage 10 weist eine Sortieranlage 32 auf, die dazu dient, ein auf ein Transportmittel 28 geladenes Gepäcksortiergut 12 gemäß den Sortierkriterien zu sortieren. Die Sortieranlage 32 grenzt an die Ladestation 26 einerseits und an die Sortierziele 18 andererseits an. Auf der Basis der im Identifikationsmittel gespeicherten Informationen wird einem Gepäcksortiergut 12 einem der Sortierziele 18 zugeordnet. Dies kann insbesondere an der Ladestation 26 erfolgen, welche mit einer Leseeinheit ausgestattet ist, wobei auf der Basis ausgelesener Informationen dem Gepäcksortiergut 12 und/oder dem Transportmittel 28 eines der Sortierziele 18 zugeordnet wird. Die Sortieranlage 32 dient hierbei dazu, die an der Ladestation 26 auf ein Transportmittel 28 geladenen Gepäcksortiergüter 12 bis zum zugeordneten Sortierziel 18 zu transportieren.

Die Transportmittel 28 folgen einem Transportweg, welcher von der Ladestation 26 zum zugeordneten Sortierziel 18 führt. Dieser Transportweg ist eine Kombination von Transportstrecken 14, die ein Streckennetz mit Abzweigstellen 34 bzw. Zusammenführungsstellen 35 bilden. Die Kombination bzw. der Verlauf des Transportwegs kann im Voraus bei der Zuordnung des Sortierziels 18, insbesondere vor und/oder bei der Ladung des Gepäcksortierguts 12 auf das Transportmittel 28, ausgerechnet werden. Alternativ oder zusätzlich kann der Transportweg stückweise während des Transports bestimmt und/oder geändert werden.

Der Übersichtlichkeit halber ist in FIG 1 eine Behandlungsanlage 10 mit einer stark vereinfachten Topologie eines kleinen Flughafens dargestellt. Es sind selbstverständlich weitere, an verschiedene Flughafenkonfigurationen angepasste Topologien möglich.

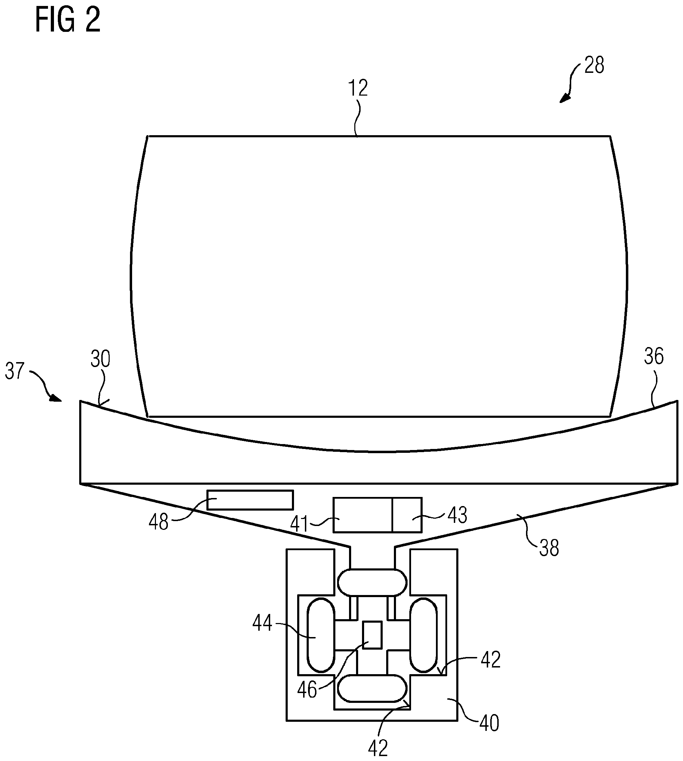

FIG 2 zeigt ein Transportmittel 28 in einer Frontansicht. Das Transportmittel 28 weist einen Aufnahmebereich 37, in welchem ein Gepäckaufnahmemittel 36 angeordnet ist, und einen Koppelbereich 38 auf, der zur Stützung des Aufnahmebereichs 37 bzw. des Gepäckaufnahmemittels 36 dient und mit einer bodenfesten Führungsvorrichtung 40 einer Transportstrecke 14 gekoppelt ist. Das Gepäckaufnahmemittel 36 bildet auf dessen Oberseite die Aufnahmefläche 30 des Transportmittels 28. Es ist insbesondere in der Form einer Transportschale - auch "Tray" genannt - ausgebildet, deren Bodenfläche vom Koppelbereich 38 trennbar ist. Das Gepäckaufnahmemittel 36 kann demnach vom Aufnahmebereich 37 des Transportmittels 28 entfernt und weiter behandelt werden, wobei dieses Transportmittel 28 mit einem weiteren, beladenen oder unbeladenen Gepäckaufnahmemittel 36 gekoppelt werden kann. Die Behandlungsanlage 10 weist demnach einen Satz von Gepäckaufnahmemitteln 36 auf, die an den Koppelbereichen 38 der Transportmittel 28 lösbar befestigt werden können. In einer besonderen Ausführung können die Gepäckaufnahmemittel 36 mit einer beschreibbaren Speichereinheit versehen sein, die zur Speicherung von Informationen dient, welche zur Herstellung einer Zuordnung des Gepäckaufnahmemittels 36 zum transportierten Gepäcksortiergut 12 bzw. zu dessen Identifikationsdaten dient.

In der betrachteten Ausführung der FIG 2 sind die Transportmittel 28 als Transportfahrzeuge ausgebildet. Diese weisen jeweils eine Antriebseinheit 41 auf, die zum Antreiben einer Fortbewegung des Transportmittels 28 entlang der Transportstrecken 14 vorgesehen ist. Mittels der Antriebseinheit kann 41 sich das Transportmittel 28 innerhalb der Sortieranlage 32 autonom fortbewegen. Die bodenfeste Führungsvorrichtung 40 ist passiv ausgebildet, das heißt die Transportstrecken 14 sind frei von Antriebselementen, die zur Fortbewegung der Transportmittel 28 dienen. In der beispielhaften, dargestellten Ausführung bildet die Führungsvorrichtung 40 als Führungsschiene Führungsflächen 42, die mit angetriebenen Wälzkörpern 44 des Transportmittels 28 in Kontakt sind. Zur Versorgung der Antriebseinheit 41 mit elektrischer Energie ist das Transportmittel 28, insbesondere der Koppelbereich 38 mit einem Energiespeicher 43 versehen. Vorzugsweise erfolgt kein Bezug von Energie über die Transportstrecken 14.

Die Transportstrecken 14 beziehungsweise die Führungsvorrichtungen 40 sind von passiven Fahrbahnelementen, wie Geradesegmenten, Bogensegmenten, geneigten Segmenten, Weichensegmenten, Zusammenführungssegmenten gebildet, auf denen sich die Transportmittel 28 bewegen. Die von den Weichensegmenten gebildeten Abzweigstellen 34 ermöglichen eine Weiterfahrt in eine erste oder in zumindest eine zweite Förderrichtung und sind vorzugsweise als passive Weichen ausgebildet. Hierzu sind die Transportmittel 28 jeweils mit einer aktiven, das heißt von einem Antrieb betätigbaren Lenkvorrichtung 46 versehen, die zur Auswahl der Förderrichtung betätigt wird. Beispielsweise kann die aktive Lenkvorrichtung 46 eine Lenkung der Wälzkörper 44 bewirken.

Die Antriebseinheit 41 und die aktive Lenkvorrichtung 46 sind von einer Steuereinheit 48 des Transportmittels 28 lokal gesteuert. Sie dient dazu, insbesondere die Geschwindigkeit des Transportmittels 28 und die aktive Lenkvorrichtung 46 zur Auswahl der Förderrichtung an einer Abzweigstelle 34 zu steuern. Die Behandlungsanlage 10 weist ein bodenfestes Verkehrsleitsystem 50 auf (siehe FIG 1), das zum Steuern des Verkehrs der Transportmittel 28 in der Sortieranlage 32 dient. Die Steuereinheiten 48 der Transportmittel 28 sind über nicht näher dargestellte Sende- und Empfangseinheiten mit dem Verkehrsleitsystem 50 datentechnisch verbunden. Die Steuereinheit 48 kann dem Verkehrsleitsystem 50 Informationen über die Position und die Geschwindigkeit des Transportmittels 28 senden und Steuerbefehle vom Verkehrsleitsystem 50 erhalten.

Zusätzlich können die Transportmittel 28 miteinander datentechnisch verbunden sein, indem die fahrzeugseitigen Steuereinheiten 48 zu einer Datenkommunikation untereinander vorgesehen sind.

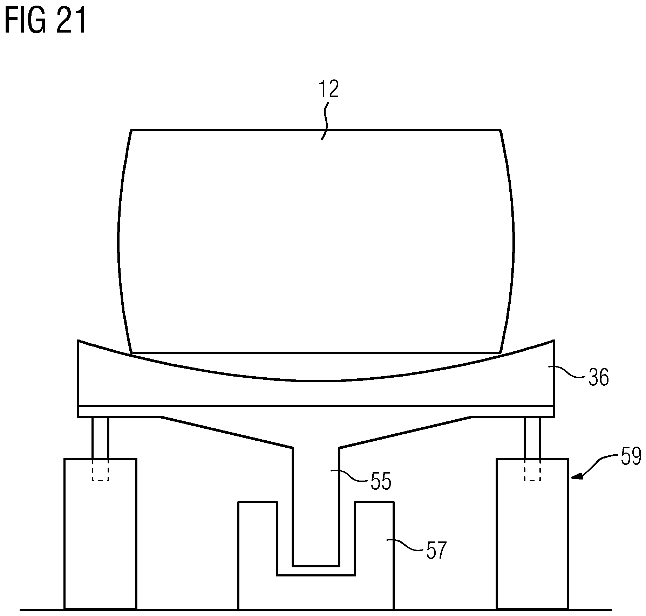

In einer alternativen, in FIG 21 gezeigten Ausführung sind die Transportmittel 28 von einer bodenfesten Antriebstechnik zur Fortbewegung angetrieben. Das Transportmittel 28 weist ein als Transportschale ausgebildetes Gepäckaufnahmemittel 36 und ein Antriebsmittel 55 auf, das zur Kopplung mit der bodenfesten Antriebstechnik dient. Im betrachteten Ausführungsbeispiel wirken das Antriebsmittel 55 und ein Antriebselement 57 einer Transportstrecke 14 zur Bildung eines Linearmotors zusammen. Weitere Ausführungen der Antriebsmittel und Antriebselemente, die z.B. auf der Nutzung eines Zahnriemens basieren, sind ebenfalls möglich. Die Abstützung bzw. Führung des Transportmittels 28 erfolgt über - in der Figur schematisch dargestellte - Führungselemente 59 der Transportstrecke 14 und korrespondierende Elemente des Transportmittels 28.

Die Beschreibung unten gilt für beide Ausführungen der Transportmittel 28 gemäß FIG 2 und FIG 21.

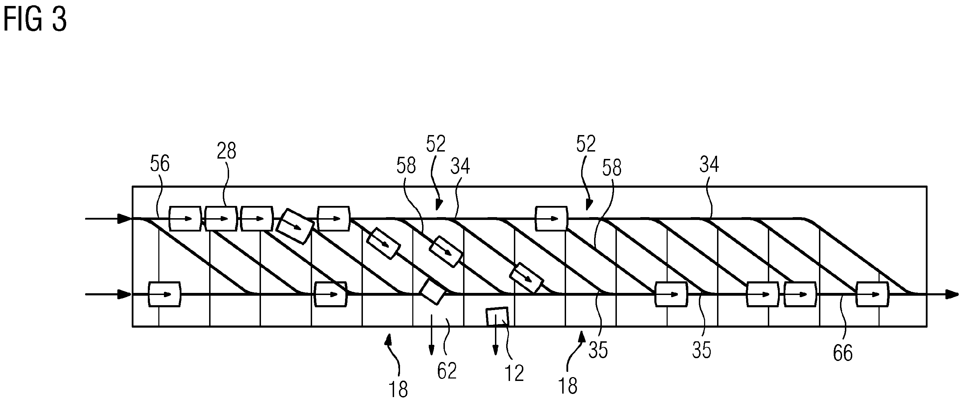

FIG 3 zeigt einen Abschnitt der Sortieranlage 32 in einer schematischen Ansicht von oben, insbesondere im Bereich von Sortierzielen 18. Wie oben beschrieben wird ein einem bestimmen Sortierziel 18 zugeordnetes Gepäcksortiergut 12 an diesem Sortierziel 18 auf ein Transportmittel 22 umgeladen, welches eine Sammlung von Gepäcksortiergütern 12 für einen bestimmten Flug aufnimmt. Für jedes Sortierziel 18 ist jeweils eine Entladestelle 52 der Sortieranlage 32 vorgesehen, an welcher ein Transportmittel 28 vom Gepäcksortiergut 12 entladen wird, das für das zugeordnete Sortierziel 18 vorgesehen ist.

Um ein Sortierziel 18 zu erreichen wird das Gepäcksortiergut 12 vom Transportmittel 28 an der entsprechenden Entladestelle 52 entladen. Die Sortieranlage 32 umfasst außerdem im Bereich der Sortierziele 18 eine Hauptförderstrecke 56, die von den Transportmitteln 28 befahren wird, bevor sie die Entladestellen 52 erreichen, und einen Satz von mehreren Entladestellen 52 beziehungsweise Sortierzielen 18 bedient. Die Hauptförderstrecke 56 transportiert Gepäcksortiergüter 12, die vorzugsweise jeweils einem dieser unterschiedlichen Sortierziele 18 zugeordnet sind. Die Sortieranlage 32 weist ferner Entladestrecken 58 auf, die jeweils von der Hauptförderstrecke 56 an Abzweigstellen 34 abgezweigt und einer unterschiedlichen Entladestelle 52 zugeordnet sind. Die Entladestrecken 58 sind derart ausgebildet, dass das Befahren einer Entladestrecke 58 durch ein beladenes Transportmittel 28 ein Entladen des zugeordneten Gepäcksortierguts 12 bewirkt. Ein bestimmtes Gepäcksortiergut 12 erreicht demnach ein zugeordnetes Sortierziel 18 mittels einer Änderung der Förderrichtung des entsprechenden Transportmittels 28 an einer Entladestelle 52 bzw. Abzweigstelle 34, bei welcher die Entladestrecke 58 abgezweigt ist, die dem entsprechenden Sortierziel 18 zugeordnet ist. Nach Verlassen der Hauptförderstrecke 56 fährt das Transportmittel 28 entlang der Entladestrecke 58, wobei das aufgenommene Gepäcksortiergut 12 zwangsweise vom Transportmittel 28 entladen wird.

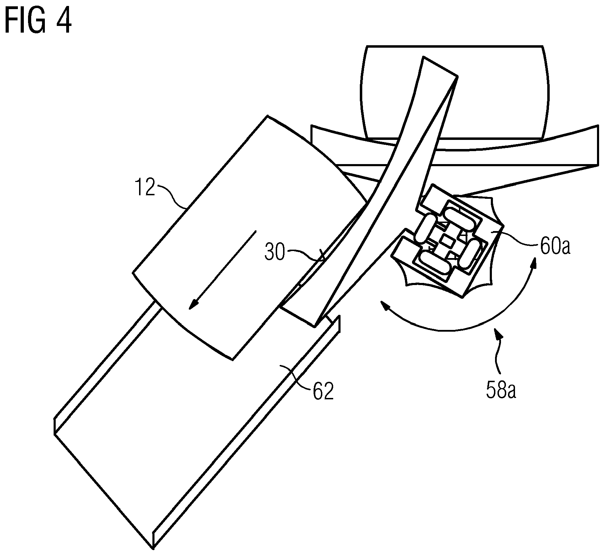

FIG 4 bis FIG 6 zeigen verschiedene Ausbildungen einer Entladestrecke 58. In diesen Ausführungen kann ein Entladen eines Transportmittels 28 erreicht werden, wobei bei dem Entladeprozess der Aufnahmebereich 37 beziehungsweise das Gepäckaufnahmemittel 36 relativ zum Koppelbereich 38 starr verbleibt.

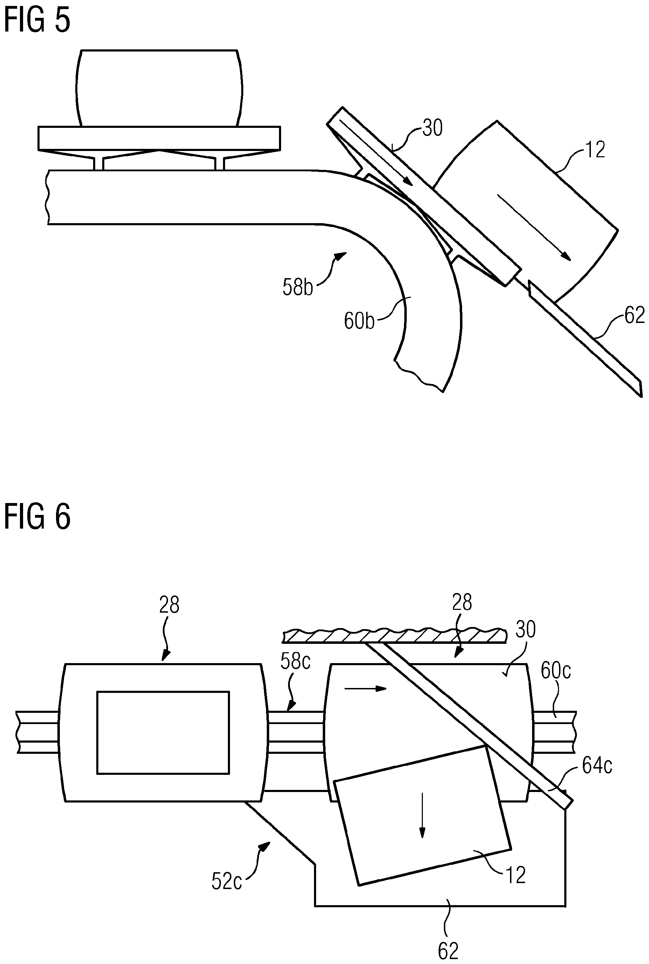

In den in FIG 4 und FIG 5 gezeigten Ausführungen erfolgt ein Kippen der Aufnahmefläche 30 relativ zum Boden, indem das gesamte Transportmittel 28 relativ zum Boden geneigt wird. Dies erfolgt mittels einer entsprechenden Ausführung der Entladestrecke 58, das heißt insbesondere von Streckensegmenten, welche Teile der Führungsvorrichtung 40 sind.

FIG 4 zeigt ein Ausführungsbeispiel, welches durch das Hinzufügen des Buchstabens "a" zu den Bezugszeichen gekennzeichnet ist und bei dem die Entladestrecke 58a zumindest ein in Förderrichtung verdrilltes Streckensegment 60a aufweist. Das verdrillte Streckensegment 60a bewirkt, bei einer Aufrechterhaltung der Förderrichtung, d.h. der Fahrtrichtung des Transportmittels 28, ein Neigen des Transportmittels 28 senkrecht zur Förderrichtung. Das Gepäcksortiergut 12 wird hierbei durch die Schwerkraft von der Aufnahmefläche 30 weg angetrieben. Es gelangt hierbei auf ein Förderelement 62, das insbesondere als Rutsche ausgebildet ist und das Gepäcksortiergut 12 zum zugeordneten Sortierziel 18 abführt.

In der mit dem Buchstaben "b" gekennzeichneten Ausführung gemäß FIG 5 weist die Entladestrecke 58b ein in Förderrichtung gebogenes Streckensegment 60b auf. Durch das Befahren des Streckensegments 60b weicht die Förderrichtung bzw. die Fahrtrichtung des Transportmittels 28 von einer horizontalen Ebene ab, das heißt die Bewegung des Transportmittels 28 weist zumindest eine Komponente auf, die vertikal ausgebildet ist. Das Befahren des Streckensegments 60b bewirkt ein Neigen der Aufnahmefläche 30, sodass das Gepäcksortiergut 12 tangential zur Förderrichtung durch die Schwerkraft von der Aufnahmefläche 30 weg bewegt wird und auf das abführende Förderelement 62 gelangt.

In der Ausführung gemäß FIG 6 erfolgt ein Entladen des Transportmittels 28 beim Befahren einer Entladestrecke 58c, die lediglich gerade Streckensegmente 60c aufweist. Die Aufnahmefläche 30 verbleibt demnach in einer horizontalen Ausrichtung relativ zum Boden. Die Entladestelle 52c weist ein seitlich neben der Entladestrecke 58c mit dem Boden festes Abweiselement 64c auf. Beim Befahren der Entladestrecke 58c wird das Gepäcksortiergut 12 von der Aufnahmefläche 30 durch das Abweiselement 64c abgeführt und gelangt auf das abführende Förderelement 62.

FIG 3, FIG 7 bis FIG 12 und FIG 22 zeigen verschiedene Topologien der Anordnung der Hauptförderstrecke 56 und der Entladestrecken 58.

In FIG 3 sind die Sortierziele 18 - in der Förderrichtung der Hauptförderstrecke 56 betrachtet - lediglich auf einer Seite der gerade ausgerichteten Hauptförderstrecke 56 angeordnet. Die Ziele 18 sind in Förderrichtung der Hauptförderstrecke 56 gesehen linear hintereinander angeordnet. In der Hauptförderstrecke 56 sind demnach Abzweigstellen 34 linear hintereinander, insbesondere regelmäßig voneinander beabstandet angeordnet. An diesen ist jeweils eine Entladestrecke 58 von der Hauptförderstrecke 56 abgezweigt, die relativ zur Förderrichtung der Hauptförderstrecke 56 schräg ausgerichtet ist. Die Entladestrecken 58 sind abschnittweise und platzsparend parallel in einer Ebene zueinander angeordnet.

Die Sortieranlage 32 umfasst außerdem eine Leerfahrtstrecke 66 auf, die der Hauptförderstrecke 56 zugeordnet und parallel zu dieser ausgerichtet ist. Diese wird von leeren Transportmitteln 28 befahren, nachdem sie entlang einer Entladestrecke 58 geführt wurden. Jede von der Hauptförderstrecke 56 abgezweigte Entladestrecke 58 mündet demnach in die Leerfahrtstrecke 66 bzw. schließt sich an einer Zusammenführungsstelle 35 an diese an. Zu den Sortierzielen 18 führt jeweils ein Förderelement 62, welches sich unterhalb der entsprechenden Entladestrecke 58 und der Leerfahrtstrecke 66 erstreckt. Die abführenden Förderelemente 62 erstrecken sich parallel zueinander und senkrecht zur Förderrichtung der Hauptförderstrecke 56.

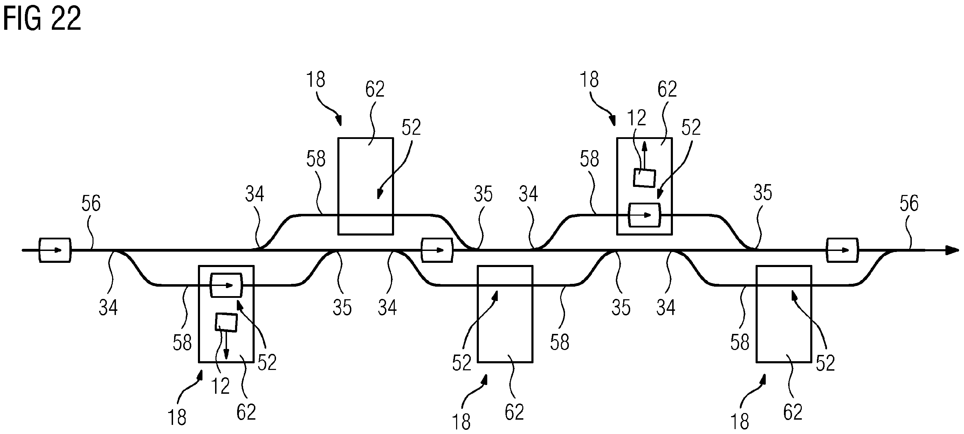

In FIG 22 ist eine alternative Anordnung der Entladestrecken 58 relativ zur Hauptförderstrecke 56 gezeigt. Gemäß dieser Ausführungsvariante schließen sich die von der Hauptförderstrecke 56 an den Abzweigstellen 34 abgezweigten Entladestrecken 58 an Zusammenführungsstellen 35 an die Hauptförderstrecke 56 wieder an. Es wird demnach auf eine Leerfahrtstrecke verzichtet bzw. die entladenen Transportmittel 28 werden über die Hauptförderstrecke 56 weiter gefördert. In der gezeigten Ausführung sind Entladestrecken 58 beidseitig der Hauptförderstrecke 56 von dieser abgezweigt. Abzweigstellen 34 und Zusammenführungsstellen 35 sind in der Hauptförderstrecke 56 angeordnet und wechseln sich ab, sodass sich die Entladestrecken 58 beidseitig der Hauptförderstrecke 56 - senkrecht zu dieser betrachtet - teilweise überlappen.

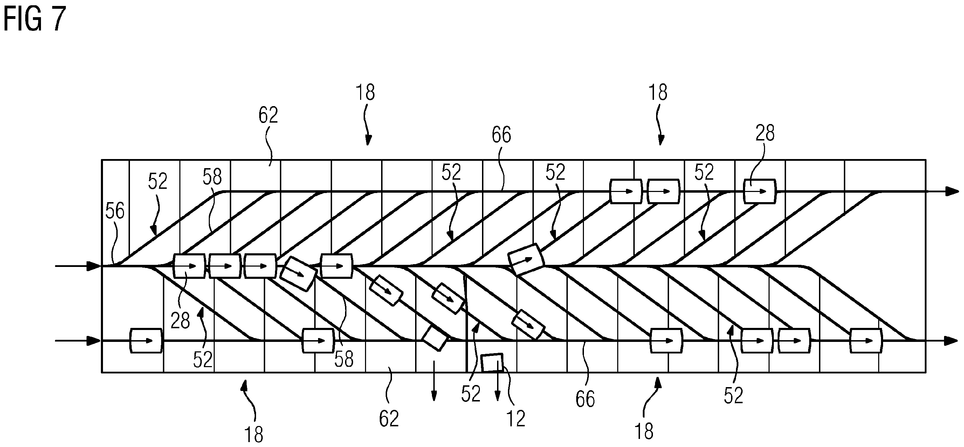

In FIG 7 bis FIG 12 werden weitere Topologien gezeigt, wobei sich die folgende Beschreibung auf die Unterschiede zur Ausführung gemäß FIG 3 beschränkt.

FIG 7 zeigt eine weitere lineare Topologie, bei welcher Sortierziele 18 - in Förderrichtung der Hauptförderstrecke 56 betrachtet - und die zugeordneten Entladestellen 52 beidseitig der geraden Hauptförderstrecke 56 angeordnet sind. Es sind demnach Entladestrecken 58 auf beiden Seiten dieser, d.h. links und rechts von dieser abgezweigt. Die Sortieranlage 32 weist daher zwei Leerfahrtstrecken 66 auf, die der gleichen Hauptförderstrecke 56 zugeordnet sind und sich beidseitig und parallel zu dieser erstrecken. In dieser Ausführung ist eine Hauptförderstrecke 56 zwei Sätzen von Entladestellen 52 zugeordnet, wobei die Sätze aneinander angrenzen und die Hauptförderstrecke 56 relativ zu den Sätzen mittig zwischen den Sätzen angeordnet ist.

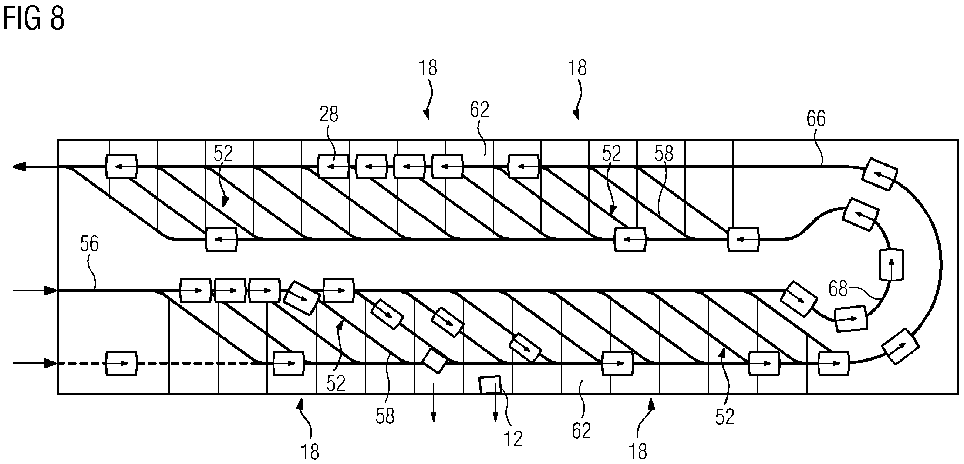

FIG 8 zeigt die Kombination von zwei räumlich getrennten Sätzen von Sortierzielen 18 beziehungsweise Entladestellen 52. Diese werden mit einer gemeinsamen Hauptförderstrecke 56 bedient, wobei die Topologie für die Bedienung von jedem Satz durch die Hauptförderstrecke 56 einer linearen Topologie gemäß FIG 3 entspricht. Die Sätze von Entladestellen 52 erstrecken sich parallel zueinander und sind einander gegenüber angeordnet. Zwischen beiden Sätzen von Entladestellen 52 erfolgt eine Änderung der Förderrichtung der Hauptförderstrecke 56. Es erfolgt insbesondere eine Umkehr der Förderrichtung mittels eines U-förmigen Streckensegments 68 in der Hauptförderstrecke 56. Es ist ferner ebenfalls eine Leerfahrtstrecke 66 vorgesehen, die im Wesentlichen parallel zur Hauptförderstrecke 56 verläuft.

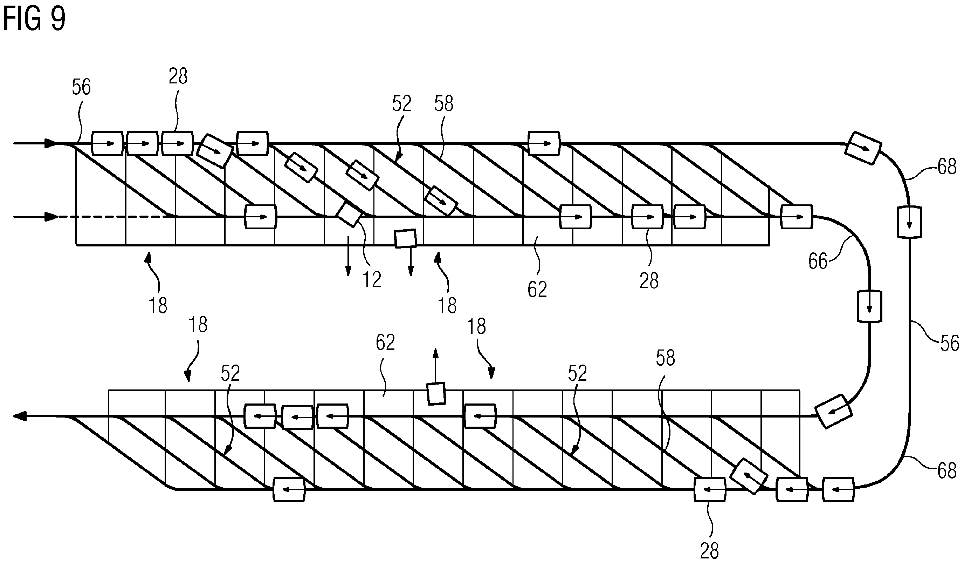

Bezüglich der relativen Anordnung der Hauptförderstrecke 56 und der Leerfahrtstrecke 66 und bezüglich des U-förmigen Streckensegments 68 ist die Hauptförderstrecke 56 in der Ausführung gemäß FIG 8 im Bereich des U-förmigen Streckensegments 68 innen angeordnet. FIG 9 zeigt eine weitere Topologie, die sich von der Ausführung der FIG 8 dadurch unterscheidet, dass die Hauptförderstrecke 56 außen angeordnet ist. Daher entsteht der weitere Unterschied, dass die Entladung der Gepäcksortiergüter 12 in FIG 8 bezüglich der U-förmigen Topologie nach außen erfolgt, während die Gepäcksortiergüter 12 in der Ausführung nach FIG 9 in eine nach innen ausgerichtete Richtung entladen werden.

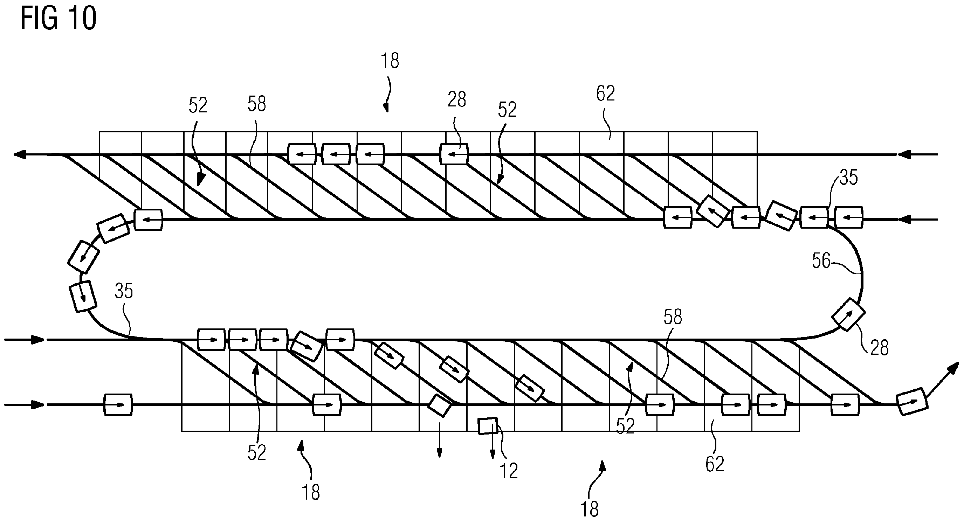

In der in FIG 10 gezeigten Topologie werden - wie in FIG 8 und FIG 9 - zwei Sätze von Sortierzielen 18 beziehungsweise Entladestellen 52 durch eine gemeinsame Hauptförderstrecke 56 bedient. Diese ist als Ring ausgebildet, wobei die Sätze von Entladestellen 52 beidseitig des Ringes angeordnet sind und zwischen den Sätzen von Entladestellen 52 ebenfalls eine Umkehr der Förderrichtung der Hauptförderstrecke 56 erfolgt. Die Hauptförderstrecke 56 weist zumindest zwei Zusammenführungsstellen 35 auf, an welchen beladene Transportmittel 28 von weiteren Abschnitten der Sortieranlage 32 kommend in den Ring eingefügt werden. Die beladenen Transportmittel 28 verlassen den Ring, indem sie auf eine vom Ring abgezweigte Entladestrecke 58 geführt werden. Die Entladung der Gepäcksortiergüter 12 erfolgt - relativ zum Ring - nach außen.

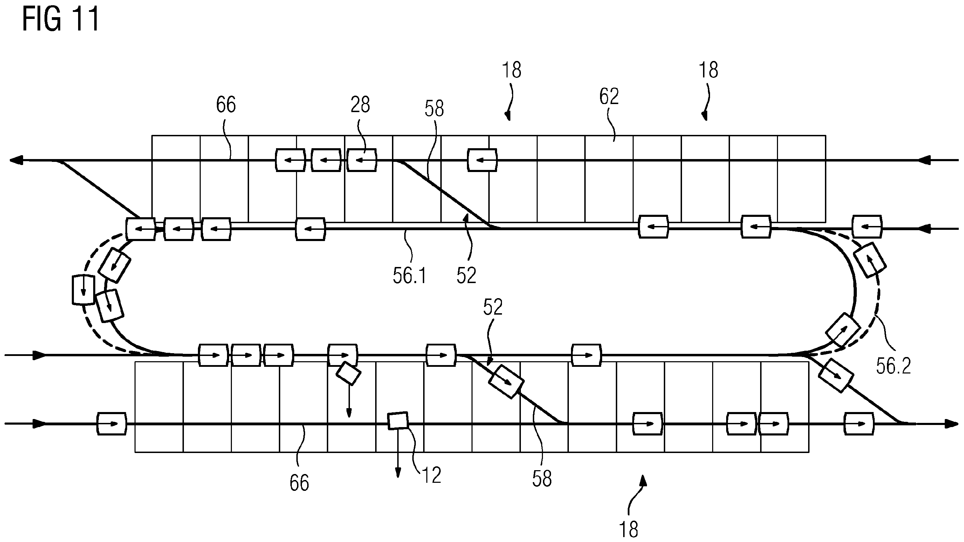

FIG 11 zeigt eine weitere Ausführung mit einer ringförmigen Topologie, die sich von der Ausführung gemäß Figur 10 dadurch unterscheidet, dass zwei ringförmige Hauptförderstrecken 56.1 und 56.2 (gestrichelt dargestellt) in zwei verschiedenen Ebenen übereinander angeordnet sind.

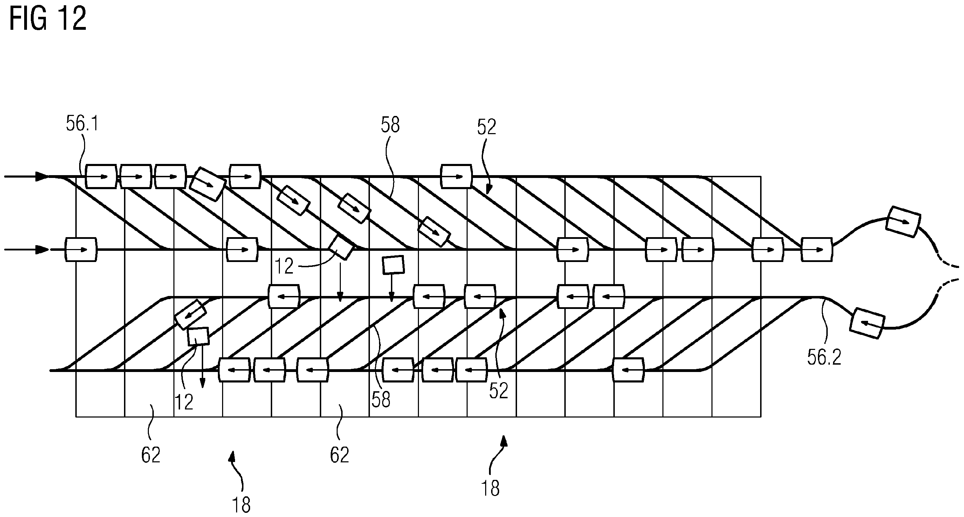

In FIG 12 sind einem gleichen Satz von Sortierzielen 18 zumindest zwei unterschiedliche Hauptförderstrecken 56.1, 56.2 zugeordnet. Diese weisen entgegengesetzte Förderrichtungen auf. Dadurch können die Sortierziele 18 des Satzes durch Transportmittel 28 bedient werden, die von unterschiedlichen Abschnitten der Sortieranlage 32, insbesondere aus entgegengesetzten Richtungen kommen. Die Entladung der Transportmittel 28 der ersten und der zweiten Hauptförderstrecke 56.1 bzw. 56.2 erfolgt in die gleiche Richtung. Einem Sortierziel 18 sind zwei Entladestellen 52, und zwar eine Entladestelle 52 für jede Hauptförderstrecke 56, zugeordnet. Einem Sortierziel 18 und dem zu diesem abführenden Förderelement 62 sind demnach zwei Entladestrecken 58 zugeordnet, die jeweils von einer der verschiedenen Hauptförderstrecken 56 abgezweigt sind. Das Förderelement 62 verläuft hierbei unter den beiden Entladestrecken 58.

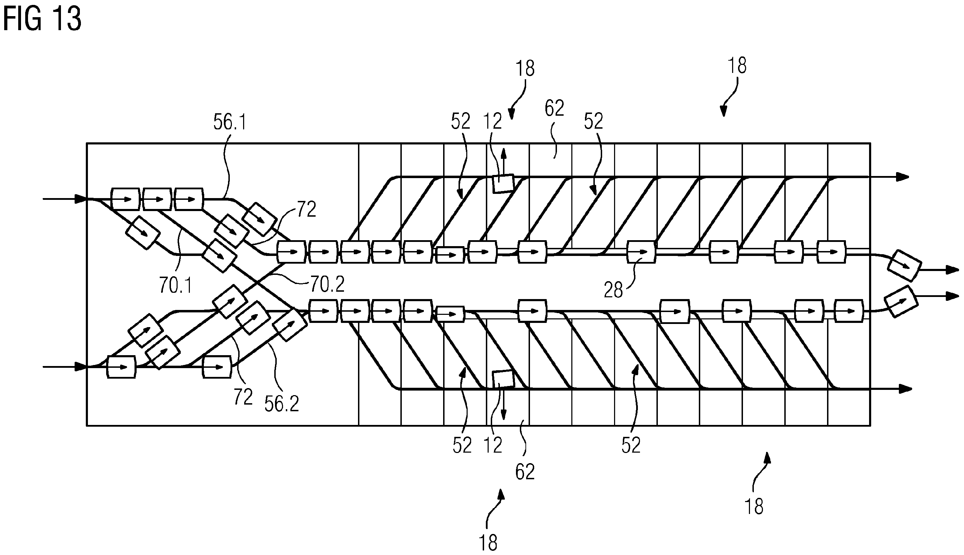

FIG 13 bis FIG 16 zeigen weitere Topologien. Der Hauptunterschied dieser zu den in FIG 3 und FIG 7 bis FIG 12 gezeigten Topologien betrifft den Bereich, der sich unmittelbar - in Förderrichtung einer Hauptförderstrecke 56 betrachtet - vor einem Satz von Sortierzielen 18 beziehungsweise Entladestellen 52 befindet: Die Transportmittel 28 können vor dem Erreichen eines Satzes von Entladestellen 52 die zu diesem führende Hauptförderstrecke 56 verlassen, wodurch Freistellen im Haupttransportstrang entstehen. In der betrachteten Ausführung sind zwei räumlich voneinander getrennten Sätzen von Entladestellen 52 jeweils eine unterschiedliche Hauptförderstrecke 56.1, 56.2 zugeordnet. Es ist zumindest eine Übergangsstrecke 70.1 vorgesehen, die von der Hauptförderstrecke 56.1 abgezweigt ist und mit der Hauptförderstrecke 56.2 zusammengeführt ist. So ist für ein Transportmittel 28 ein Übergang zwischen der Hauptförderstrecke 56.1 und der Hauptförderstrecke 56.2 möglich. Ein Übergang von der Hauptförderstrecke 56.2 zur Hauptförderstrecke 56.1 ist mittels einer Übergangsstrecke 70.2 ebenfalls möglich.

Ferner ist innerhalb einer Hauptförderstrecke 56 bzw. einer Übergangsstrecke 70 eine interne Überholstrecke 72 vorgesehen, die ein Überholen von Transportmitteln 28 innerhalb der gleichen Hauptförderstrecke 56 bzw. Übergangsstrecke 70 ermöglicht.

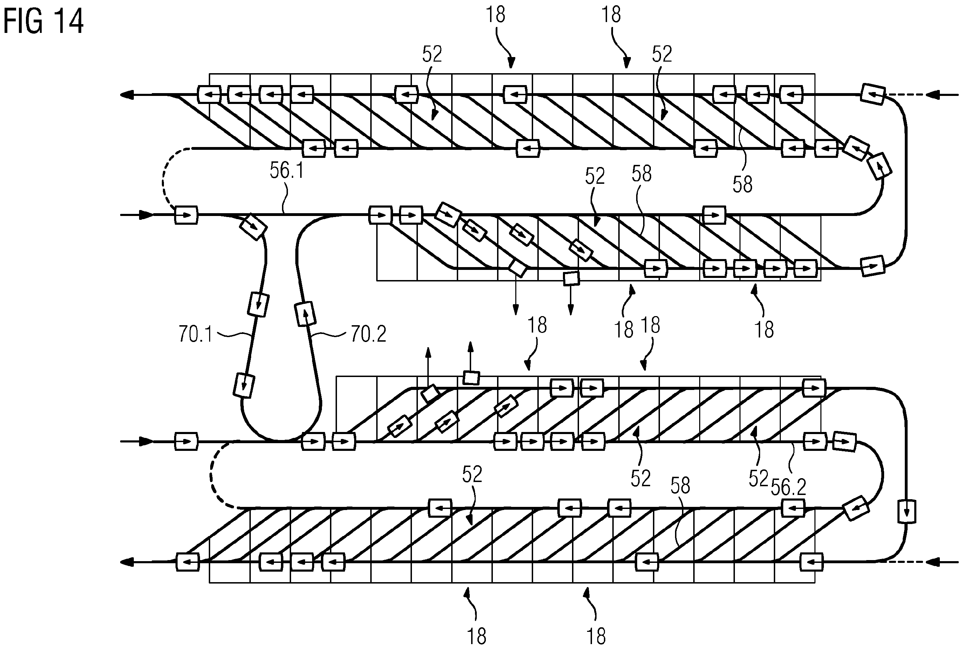

In FIG 14 ist eine Topologie gezeigt, die einer Kombination von zwei Anordnungen gemäß FIG 8 zeigt. Wie oben beschrieben weist eine derartige Anordnung zumindest zwei Sätze von Entladestellen 52 auf, die von einer gemeinsamen Hauptförderstrecke 56 bedient werden. In der Ausführung gemäß Figur 14 sind demnach zwei Hauptförderstrecken 56.1, 56.2 vorgesehen, die jeweils eine dieser Anordnungen von zwei Sätzen von Entladestellen 52 bedienen. Es sind Übergangsstrecken 70.1, 70.2 vorgesehen, die - wie oben für die Figur 13 erläutert - einen Übergang zwischen den Hauptförderstrecken 56.1, 56.2 ermöglichen.

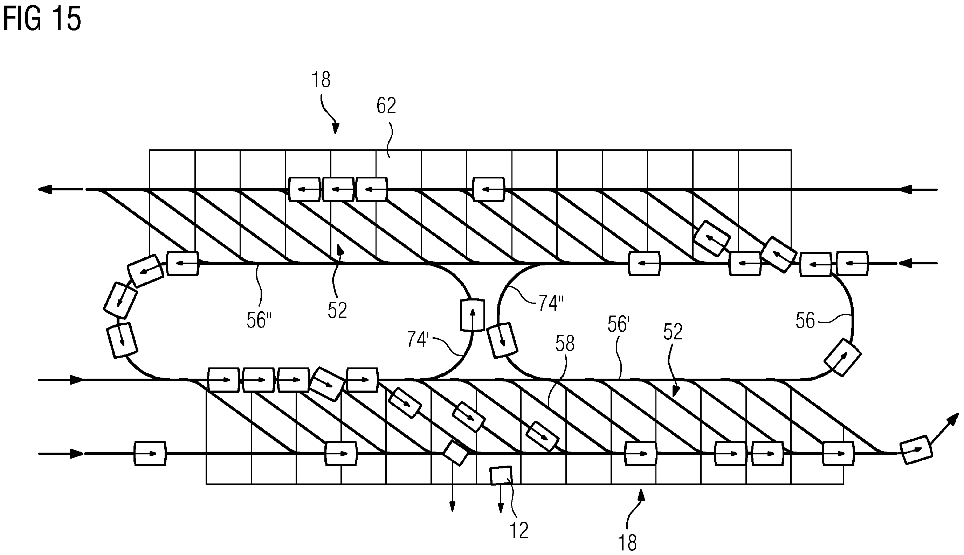

FIG 15 zeigt die in FIG 10 dargestellte Topologie in einer Ausführungsvariante. Wie oben für FIG 10 beschrieben werden beide Sätze von Entladestellen 52 durch eine gemeinsame, ringförmige Hauptförderstrecke 56 bedient. Diese weist demnach einen ersten, insbesondere geraden Abschnitt 56', welcher den ersten Satz von Entladestellen 52 bedient, und einen zweiten, insbesondere geraden Abschnitt 56" auf, welcher den gegenüberliegenden Satz von Entladestellen 52 bedient. Beide Abschnitte 56', 56" sind durch gekrümmte Streckensegmente miteinander verbunden, in welche eine Umkehr der Förderrichtung erfolgt.

Der Unterschied zur Ausführung der FIG 10 besteht in der Anordnung einer Verbindungsstrecke 74', die von der Hauptförderstrecke 56 im ersten Abschnitt 56' abgezweigt ist und sich an die Hauptförderstrecke 56 im zweiten Abschnitt 56" wieder anschließt. Ein umgekehrter Übergang ist mittels einer zweiten Verbindungsstrecke 74" möglich. So ist ein Übergang von einem Satz von Umladestationen 52 zum anderen Satz von Umladestationen 52 möglich, bevor das Ende des erstgenannten Satzes erreicht wird.

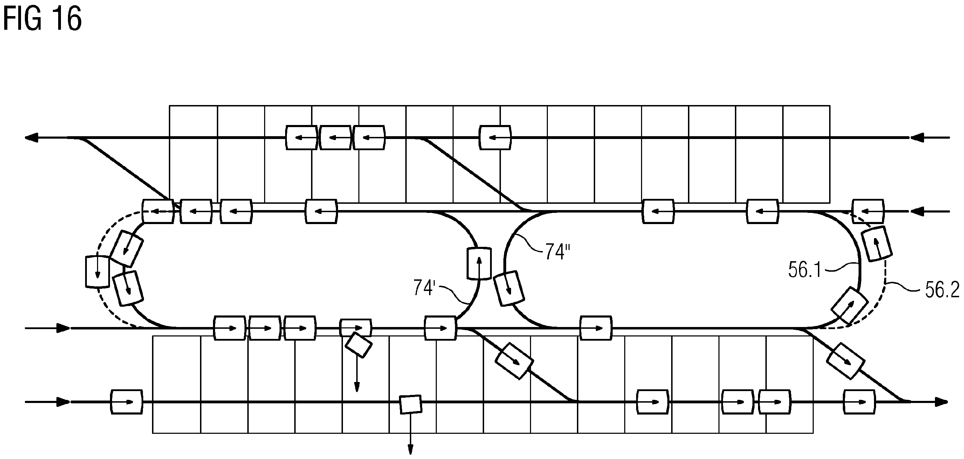

FIG 16 zeigt eine weitere Ausführung mit einer ringförmigen Topologie gemäß FIG 15, die sich von dieser Ausführung dadurch unterscheidet, dass zwei ringförmige Hauptförderstrecken 56.1 und 56.2 in zwei verschiedenen Ebenen übereinander angeordnet sind. Hierbei handelt es sich um eine Ausführungsvariante der Topologie gemäß FIG 11 mit der Anordnung von Abkürzungsstrecken 74', 74".

Die Behandlungsanlage 10 weist des Weiteren eine Speicheranlage 76 auf, die schematisch in FIG 1 dargestellt ist. Die Speicheranlage 76 wird von dem Satz von Transportmitteln 28 bedient und dient dazu, beladene oder unbeladene Gepäckaufnahmemittel 36 für eine bestimmte Speicherzeit aufzunehmen.

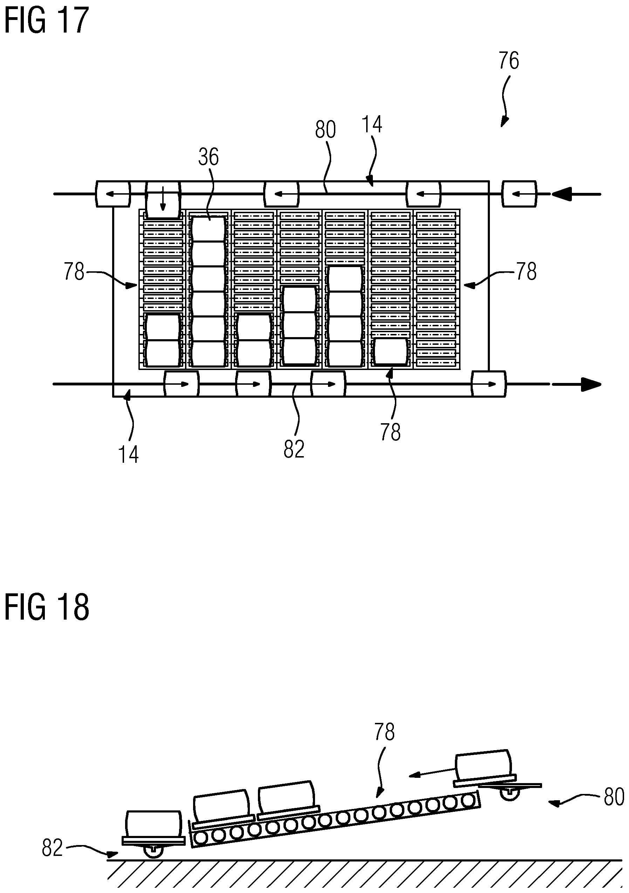

Eine beispielhafte Ausführung der Speicheranlage 76 ist in FIG 17 und FIG 18 gezeigt. In FIG 17 ist die Speicheranlage 76 in einer schematischen Ansicht von oben dargestellt. Diese wird von einer Transportstrecke 14 bedient, welcher ein Satz von Speicherzellen 78 zugeordnet ist. Die Speicherzellen 78 erstrecken sich parallel zueinander zwischen einem Abladeabschnitt 80 der Transportstrecke 14, in welchem ein Gepäckaufnahmemittel 36 vom Koppelbereich 38 des Transportmittels 28 getrennt wird, um in eine zugeordnete Speicherzelle 78 zu gelangen, und einem Ladeabschnitt 82 der Transportstrecke 14, in welchem ein Gepäckaufnahmemittel 36 mit dem Koppelbereich 38 eines sich in diesem Abschnitt befindenden Transportmittels 28 gekoppelt wird.

Wie FIG 18, die eine Speicherzelle 78 in einer Seitenansicht senkrecht zur Förderrichtung der Transportstrecke 14 zeigt, zu entnehmen ist, sind die Speicherzellen 78 als passive Förderelemente ausgebildet, die zwischen dem Abladeabschnitt 80 und dem Ladeabschnitt 82 der Transportstrecke 14 derart geneigt sind, dass sich die Gepäckaufnahmemittel 36 mittels der Schwerkraft bis zum dem Ladeabschnitt 82 zugewandten Ende der Speicherzelle 78 bewegen. An diesem Ende ist ein schaltbares Stoppelement angeordnet, welches nicht gezeigt ist. In der betrachteten Ausführung sind die passiven Förderelemente als Rollen ausgebildet, wobei weitere Ausführungen, wie insbesondere als Gleitfläche ebenfalls denkbar sind.

Die Länge einer Speicherzelle 78 bestimmt deren Aufnahmekapazität, die für die Speicherung eines einzigen Gepäckaufnahmemittels 36 bis zur Speicherung einer Gruppe von Gepäckaufnahmemitteln 36 dimensioniert ist, welche Gepäcksortiergüter 12 mit zumindest einem identischen Sortierparameter tragen.

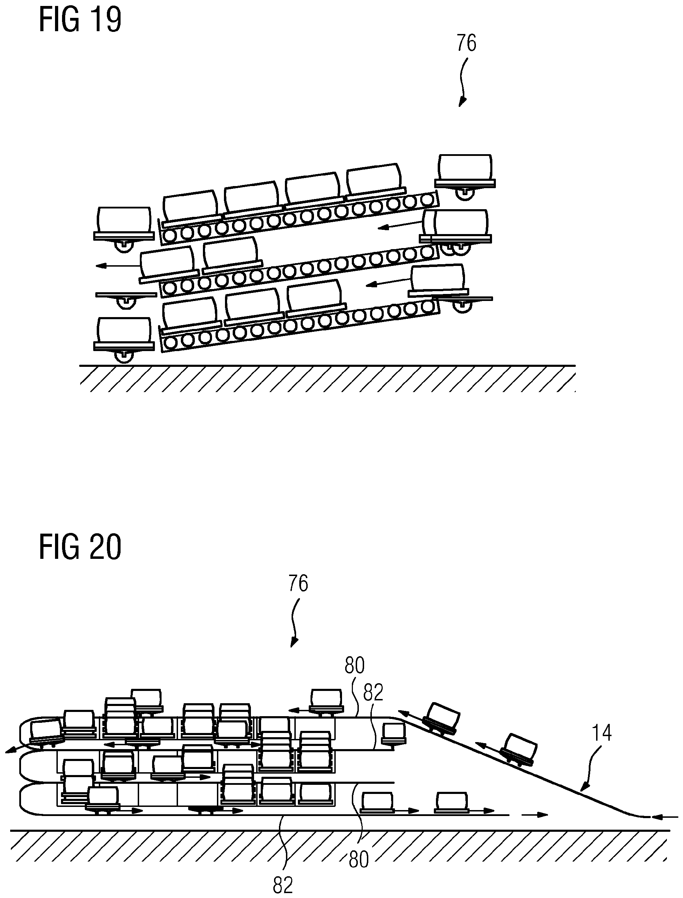

FIG 19 und FIG 20 zeigen eine alternative Ausführung der Speicheranlage 76. Diese basiert auf der Anordnung gemäß FIG 17 und FIG 18, wobei mehrere solcher Anordnungen übereinander platziert sind. Die Transportstrecke 14 ist von einer alternierenden Anordnung von Abladeabschnitten 80 und Ladeabschnitten 82 gebildet und weist die Form einer Helix auf, wie in FIG 20 zu sehen ist. In dieser Ausführung kann ein Einzelzugriff auf ein bestimmtes Gepäckaufnahmemittel 36 in den höheren Etagen der Speicheranlage 76 besonders einfach und effizient erfolgen, indem die in der entsprechenden Speicherzelle 78 vor diesem angeordneten Gepäckaufnahmemitteln 36 von Transportmitteln 28 übernommen werden und in eine Speicherzelle 78 einer tiefer angeordneten Etage wieder aufgenommen werden.

## Patentansprüche

1. Vorrichtung zur Behandlung von Sortiergütern (12) gemäß Sortierkriterien zwischen zumindest einer Eingabestelle (15) und Sortierzielen (18), mit wenigstens einer Sortieranlage (32), die zwischen der Eingabestelle (15) und den Sortierzielen (18) angeordnet ist und einen Satz von Transportmitteln (28) zum Transport von Sortiergütern (12) aufweist, wobei die Transportmittel (28) jeweils zur Aufnahme eines einem Sortierziel (18) zugeordneten Sortierguts (12) vorgesehen sind, wobei die Sortieranlage (32) zumindest eine Hauptförderstrecke (56) für Transportmittel (28) des Satzes von Transportmitteln (28), zumindest eine wenigstens einem Sortierziel (18) zugeordnete Entladestelle (52) zum Entladen der Transportmittel (28), und eine der Entladestelle (52) zugeordnete, von der Hauptförderstrecke (56) abgezweigte Entladestrecke (58) aufweist, **dadurch kennzeichnet, dass** die Entladestrecke (58) derart ausgebildet ist, dass das Befahren der Entladestrecke (58) durch ein beladenes Transportmittel (28) ein Entladen des zugeordneten Sortierguts (12) an der Entladestelle (52) bewirkt.

2. Vorrichtung nach Anspruch 1, wobei die Sortieranlage (32) einen Satz von Entladestellen (52) aufweist, die in Förderrichtung der Hauptförderstrecke (56) hintereinander angeordnet sind, wobei diesem Satz von Entlade-stellen (52) ein Satz von Entladestrecken (58) zugeordnet ist, die an hintereinander angeordneten Abzweigstellen (34) von der Hauptförderstrecke (56) abgezweigt sind.

3. Vorrichtung nach Anspruch 2, wobei die Entladestrecken (58) parallel zueinander ausgerichtet und in eine gemeinsame Leerfahrtstrecke (66) für entladene Transportmittel (28) zusammengeführt sind.

4. Vorrichtung nach Anspruch 2 oder 3, wobei die Hauptförderstrecke (56) geradlinig ausgebildet ist und die Entladestrecken (58) relativ zur Hauptförderstrecke (56) schräg ausgerichtet sind.

5. Vorrichtung nach Anspruch 2, wobei sich die Entladestrecken (58) an die Hauptförderstrecke (56) wieder anschließen.

6. Vorrichtung nach einem der Ansprüche 2 bis 5, wobei den Entladestrecken (58) jeweils ein Förderelement (62) zugeordnet ist, welches zum Abführen eines entlang der Entladestrecke (58) entladenen Sortierguts (12) zum zugeordneten Sortierziel (18) dient und sich unterhalb der Entladestrecke (28) erstreckt.

7. Vorrichtung nach einem der Ansprüche 2 bis 6, wobei die Hauptförderstrecke (56) einen geschlossenen, ringförmigen Abschnitt aufweist.

8. Vorrichtung nach einem der Ansprüche 1 bis 7, wobei die Transportmittel (28) jeweils ein Sortiergutaufnahmemittel (36) und ein Antriebsmittel (55) aufweisen, das zur Kopplung mit einer bodenfesten Antriebstechnik zur Fortbewegung des Transportmittels (28) gekoppelt ist.

9. Vorrichtung nach einem der Ansprüche 1 bis 7, wobei die Transportmittel (28) als Transportfahrzeuge umfassend jeweils eine Antriebseinheit (41) ausgebildet sind, die zur autonomen Fortbewegung des Transportfahrzeugs wenigstens innerhalb eines Teilbereichs der Sortieranlage (32) vorgesehen ist.

10. Vorrichtung nach Anspruch 9, mit einem Satz von Sortiergutaufnahmemitteln (36), die jeweils eine Aufnahmefläche (30) für ein Sortiergut (12) bilden und zur trennbaren Kopplung mit einem Transportfahrzeug des Satzes von Transportfahrzeugen vorgesehen sind.

11. Vorrichtung nach Anspruch 9 oder 10, mit einer bodenfesten Führungsvorrichtung (40) zur Führung der Transportfahrzeuge (28).

12. Vorrichtung nach Anspruch 2 und einem der Ansprüche 9 bis 11, wobei die Führungsvorrichtung (40) die Abzweigstellen (34) aufweist, die jeweils eine Weiterfahrt in eine erste oder in zumindest eine zweite Förderrichtung ermöglichen, und die Transportfahrzeuge (28) jeweils eine aktive Lenkvorrichtung (46) aufweisen, die eine Weiterfahrt in der ersten bzw. zweiten Förderrichtung bewirkt.

13. Vorrichtung nach einem der Ansprüche 1 bis 12, wobei die Entladestrecke (58a) ein verdrilltes Streckensegment (60a) aufweist.

14. Vorrichtung nach einem der Ansprüche 1 bis 13, wobei die Entladestrecke (58b) ein gebogenes, zumindest teilweise vertikal ausgerichtetes Streckensegment (60b) aufweist.

15. Vorrichtung nach einem der Ansprüche 1 bis 13, wobei der Entladestrecke (58c) ein bodenfestes Abweiselement (64c) zugeordnet ist.

## Claims

1. Device for handling sort items (12) according to sorting criteria between at least one input point (15) and sorting destinations (18), having at least one sorting plant (32), which is arranged between the input point (15) and the sorting destinations (18) and has a set of transport means (28) for transporting sort items (12), wherein the transport means (28) are each provided for accommodating a sort item (12) that is allocated to a sorting destination (18), wherein the sorting plant (32) has at least one main conveying section (56) for transport means (28) of the set of transport means (28), at least one unloading point (52), allocated to at least one sorting destination (18), for unloading the transport means (28), and an unloading section (58) that is allocated to the unloading point (52) and branches off from the main conveying section (56), **characterised in that** the unloading section (58) takes a form such that travel on the unloading section (58) by a laden transport means (28) brings about unloading of the associated sort item (12) at the unloading point (52).

2. Device according to claim 1, wherein the sorting plant (32) has a set of unloading points (52) that are arranged one after the other, as seen in the conveying direction of the main conveying section (56), wherein there is allocated to this set of unloading points (52) a set of unloading sections (58) that branch off from the main conveying section (56) at branching points (34) that are arranged one after the other.

3. Device according to claim 2, wherein the unloading sections (58) are oriented parallel to one another and merge into a common no-load section (66) for unladen transport means (28) .

4. Device according to claim 2 or 3, wherein the main conveying section (56) is constructed to be straight and the unloading sections (58) are oriented obliquely in relation to the main conveying section (56).

5. Device according to claim 2, wherein the unloading sections (58) join into the main conveying section (56) again.

6. Device according to one of claims 2 to 5, wherein there is allocated to each of the unloading sections (58) a conveying element (62), which serves to guide away to the allocated sorting destination (18) a sort item (12) that is unloaded along the unloading section (58) and which extends below the unloading section (28).

7. Device according to one of claims 2 to 6, wherein the main conveying section (56) has a closed ring-shaped portion.

8. Device according to one of claims 1 to 7, wherein each of the transport means (28) has a sort item accommodating means (36) and a drive means (55) that is coupled for coupling to a drive system that is fixed to the floor, for moving the transport means (28) onward.

9. Device according to one of claims 1 to 7, wherein the transport means (28) take the form of transport vehicles each including a drive unit (41) that is provided for autonomous onward movement of the transport vehicle, at least within a part area of the sorting plant (32).

10. Device according to claim 9, having a set of sort item accommodating means (36) that each form an accommodation surface (30) for a sort item (12) and are provided for separable coupling to a transport vehicle of the set of transport vehicles.

11. Device according to claim 9 or 10, having a guide device (40) that is fixed to the floor, for guiding the transport vehicles (28).

12. Device according to claim 2 and one of claims 9 to 11, wherein the guide device (40) has the branching points (34) that each enable onward travel in a first or in at least a second conveying direction, and the transport vehicles (28) each have an active steering device (46) that brings about onward transport in the first or second conveying direction.

13. Device according to one of claims 1 to 12, wherein the unloading section (58a) has a twisted section segment (60a).

14. Device according to one of claims 1 to 13, wherein the unloading section (58b) has a curved and at least partly vertically oriented section segment (60b).

15. Device according to one of claims 1 to 13, wherein there is allocated to the unloading section (58c) a deflecting element (64c) that is fixed to the floor.

## Revendications

1. Dispositif destiné au traitement de produits à trier (12) selon des critères de tri entre au moins un point d'entrée (15) et des destinations de tri (18), avec au moins une installation de tri (32) qui est disposée entre le point d'entrée (15) et les destinations de tri (18) et présente un ensemble de moyens de transport (28) destinés au transport de produits à trier (12), dans lequel les moyens de transport (28) sont respectivement prévus pour la réception d'un produit à trier (12) associé à une destination de tri (18), dans lequel l'installation de tri (32) présente au moins une voie de transport principale (56) pour les moyens de transport (28) de l'ensemble de moyens de transport (28), au moins un point de déchargement (52) associé à au moins une destination de tri (18) destiné au déchargement des moyens de transport (28), et une voie de déchargement (58) bifurquant de la voie de transport principale (56) et associée au point de déchargement (52), **caractérisé en ce que** la voie de déchargement (58) est réalisée de telle sorte que le parcours de la voie de déchargement (58) à travers un moyen de transport (28) chargé génère au niveau du point de déchargement (52) un déchargement du produit à trier (12) associé.

2. Dispositif selon la revendication 1, dans lequel l'installation de tri (32) présente un ensemble de points de déchargement (52), qui sont disposés les uns derrière les autres dans la direction de transport de la voie de transport principale (56), dans lequel un ensemble de voies de déchargement (58) est associé à cet ensemble de points de déchargement (52), lesquelles voies de déchargement bifurquent de la voie de transport principale (56) au niveau de points de bifurcation (34) disposés les uns derrière les autres.

3. Dispositif selon la revendication 2, dans lequel les voies de déchargement (58) sont orientées parallèlement les unes aux autres et sont réunies dans un itinéraire à vide commun (66) pour les moyens de transport (28) déchargés.

4. Dispositif selon la revendication 2 ou 3, dans lequel la voie de transport principale (56) est réalisée de manière à être rectiligne et les voies de déchargement (58) sont orientées de manière à être inclinées par rapport à la voie de transport principale (56).

5. Dispositif selon la revendication 2, dans lequel les voies de déchargement (58) se raccordent à nouveau à la voie de transport principale (56).

6. Dispositif selon l'une des revendications 2 à 5, dans lequel aux voies de déchargement (58) est respectivement associé un élément de transport (62), lequel sert à l'évacuation d'un produit à trier (12) déchargé le long de la voie de déchargement (58) au niveau de la destination de tri (18) associée et s'étend en dessous de la voie de déchargement (28) .

7. Dispositif selon l'une des revendications 2 à 6, dans lequel la voie de transport principale (56) présente une section annulaire fermée.

8. Dispositif selon l'une des revendications 1 à 7, dans lequel les moyens de transport (28) présentent respectivement un moyen de réception de produits à trier (36) et un moyen d'entraînement (55), qui est couplé en vue d'un couplage à une technique d'entraînement stable au sol en vue du déplacement du moyen de transport (28).

9. Dispositif selon l'une des revendications 1 à 7, dans lequel les moyens de transport (28) sont réalisés en tant que véhicules de transport comprenant respectivement une unité d'entraînement (41) qui est prévue pour le déplacement autonome du véhicule de transport au moins à l'intérieur d'une zone particulière de l'installation de tri (32).

10. Dispositif selon la revendication 9, avec un ensemble de moyens de réception de produits à trier (36), qui forment respectivement une surface de réception (30) pour un produit à trier (12) et sont prévus pour un couplage séparable avec un véhicule de transport de l'ensemble de véhicules de transport.

11. Dispositif selon la revendication 9 ou 10, avec un dispositif de guidage stable au sol (40) destiné au guidage des véhicules de transport (28).

12. Dispositif selon la revendication 2 et l'une des revendications 9 à 11, dans lequel le dispositif de guidage (40) présente les points de ramification (34) qui rendent possible respectivement une poursuite de parcours dans une première ou au moins une deuxième direction de transport, et les véhicules de transport (28) présentent respectivement un dispositif de direction active (46) qui génère une poursuite de parcours dans la première resp. la deuxième direction de transport.

13. Dispositif selon l'une des revendications 1 à 12, dans lequel la voie de déchargement (58a) présente un segment de voie torsadé (60a).

14. Dispositif selon l'une des revendications 1 à 13, dans lequel la voie de déchargement (58b) présente un segment de voie (60b) coudé et orienté au moins en partie verticalement.

15. Dispositif selon l'une des revendications 1 à 13, dans lequel un élément de renvoi stable au sol (64c) est associé à la voie de déchargement (58c).
